# EUROPÄISCHE PATENTSCHRIFT

(11) **EP 1 314 672 B1**
(45) Veröffentlichungstag und Bekanntmachung des Hinweises auf die Patenterteilung: **03.01.2007**
(21) Anmeldenummer: 02025354.8
(22) Anmeldetag: 13.11.2002
(51) Int. Cl.: B65H 54/28, H02K 49/10

(54) **Changiereinrichtung mit Magnetkupplung**
Traversing device with magnetic coupling
Dispositif de va-et-vient avec accouplement magnétique

(30) Priorität: 14.11.2001 DE 10155763
(43) Veröffentlichungstag der Anmeldung: 28.05.2003
(73) Patentinhaber: MASCHINENFABRIK RIETER AG, 8406 Winterthur (CH)
(72) Erfinder: Gabi, Tino, 8546 Islikon (CH)

(56) Entgegenhaltungen:
- EP-A- 0 510 829
- CH-A- 628 001
- CH-A- 667 862
- DE-C- 953 051
- GB-A- 795 085
- GB-A- 1 512 627
- DATABASE WPI Section Ch, Week 198847 Derwent Publications Ltd., London, GB; Class F02, AN 1988-336473 XP002248549 -& SU 1 395 578 A (KURSK SCHETMASH COM), 15. Mai 1988 (1988-05-15)
- PATENT ABSTRACTS OF JAPAN vol. 2000, no. 26, 1. Juli 2002 (2002-07-01) -& JP 2001 261234 A (MURATA MACH LTD), 26. September 2001 (2001-09-26)

## Beschreibung

Die Erfindung betrifft eine Vorrichtung gemäss dem Oberbegriff des Anspruchs 1

### Stand der Technik

Flügelchangiereinrichtungen werden in Spulmaschinen gebraucht, um einen aufzuwindenden Faden während des Spulenaufbaus in der axialen Richtung der Spule hin- und herzubewegen. Zu einer Flügelchangiereinrichtung gehören üblicherweise ein Gehäuse mit Motor, ein Drehmoment übertragende Elemente, um Antriebskräfte von diesem Motor auf die Vorrichtung zu übertragen und eine eigentliche Changiervorrichtung, wie mit einem oder mehreren Flügeln, die Fäden hin- und herbewegend auf einer Spule ablegen. Die Elemente, die das Drehmoment auf die eigentliche Changiervorrichtung übertragen, sind hierbei bevorzugterweise Riemen- und/oder Zahnradgetriebe.

Solche Changiervorrichtungen sind bspw. aus den europäischen Patentschriften EP 0 622 324 oder EP 0 114 641 bekannt.

Des Weiteren ist eine magnetische Changiervorrichtung bekannt aus der Patentschrift DE 953 051. Dabei trägt ein auf einer Führungsstange gelagerter Fadenführer einen Permanentmagnet und ist durch sich vorbeibewegende Permanentmagnete, die auf einer parallel zur Gleitstange drehbar angeordneten Trommel in je einer hin und her gehenden Schraubenlinie angeordnet sind, verschiebbar.

Ebenfalls bekannt aus der Patentschrift EP 0 510 829 ist eine Changierung, bei welcher sich die Hin- und Her-Bewegung durch ein Ein- und Auskuppeln von zwei sich gegenläufig drehenden Antriebsmitteln ergibt. Derb Fadenführer ist an einem Zahnriemen angeordnet, welcher links und rechts der jeweiligen Endposition der Changierung über ein Zahnriemenrad geführt ist. Die beiden Zahnriemenräder werden abwechselnd mit unterschiedlicher Drehrichtung angetrieben, was zur Hin- und Her-Bewegung des Fadenführers führt. Die Kupplungen zwischen Antriebselement und Riemenrad sind als mit einer rheologischen, auf elektrische Erregung reagierenden, Flüssigkeit gefüllte Kupplungen ausgeführt. Bei einer Flügelchangierung müssen zwischen den Teilen der Changiervorrichtung exakte Winkelbeziehungen eingehalten werden, einerseits zwischen den Führungselementen für die Hin-Bewegung und den Elementen für die Her-Bewegung, andererseits zwischen den Führungselementen eines Fadens und den einem Nachbarfaden zugeordneten Elementen. Eine Kupplung hat hierbei die primäre Aufgabe, bei einer Blockade eine Dejustierung dieser Winkelbeziehungen zu verhindern. Die bisher bekannten Changierungen haben den Nachteil, dass eine störungsbedingte Blockade, bspw. durch Fadenbruch, neben der Aufhebung der exakten Winkelbeziehungen zu weiteren Komplikationen führt. Bisher benutzte Rastkupplungen, die ihrerseits sehr genau eingestellt werden müssen, bedürfen nach einer Störung ebenfalls einer schwierigen und sorgfältigen Nachjustierung und zeigen einen erhöhten Verschleiss. Ein verzögertes Bemerken einer Blockade kann zu Verzögerungen in der Produktion und damit zu weiteren Problemen führen.

Es war daher Aufgabe der Erfindung, ein günstiges wartungs-, einstellungs- und verschleissfreies Austauschprodukt für die bisher verwendete Kupplung herzustellen, das einen Überlastungsschutz, eine problemlose Montage und Demontage und damit eine flexiblere Weiterentwicklung der gesamten Einrichtung gewährleistet.

Diese Aufgabe wird durch den Gegenstand im unabhängigen Anspruch 1 gelöst. Die abhängigen Ansprüche betreffen vorteilhafte Varianten.

Die erfindungsgemässe Lösung besteht in einer Flügelchangierung mit Magnetkupplung, die, mit Permanentmagneten bestückt, durch eine berührungsfreie Drehmomentübertragung einen flexibleren Einsatz der Kupplung, damit flexiblere Einbaumöglichkeiten für die Gesamteinrichtung und eine Signalabgabe bei Störungen ermöglicht. Gleichzeitig kann die erfindungsgemässe Kupplung ganz oder teilweise als Riemenrad für einen Riemenantrieb benutzt werden, was Kosten reduziert und die Konstruktion erleichtert.

Danach weist die Changiervorrichtung eine Antriebswelle zum Antreiben der Changierung auf. In einer bevorzugten Ausführung treibt sie über je mindestens zwei Riemenantriebe mindestens je eine untere und eine obere Flügelchangiereinheit an. Als das Drehmoment übertragende Element ist eine Magnetkupplung vorgesehen, deren Hälften jeweils Polenden aufweisen, die denen auf der anderen Hälfte berührungslos gegenüberliegen. Wenn die Magnetkupplung zumindest zur Hälfte als Riemenrad ausgebildet ist, kann die bekannte Ausführung vereinfacht werden.

Prinzipiell ist es möglich, eine Trennung von Antrieb und Changierung vorzusehen, indem die Kupplung als Riemenrad genutzt oder an einen Riemen angekoppelt wird. Somit kann die Changiereinrichtung als Ganze weggeschwenkt oder ausgebaut werden, während der Motor ortsfest in der Maschine verbleibt.

Eine derartige erfindungsgemässe Flügelchangierung mit Magnetkupplung hat verschiedene Vorteile. Diese Art von Kupplung muss weder eingestellt werden noch ist sie anfällig für Verschmutzung. Sie ist leicht zu montieren und zu reinigen. Durch den berührungslosen Betrieb ergibt sich kein Verschleiss; dazu ist eine Trennung von Antrieb und Changierung möglich, was zu grösserer Flexibilität für Montage und Wartung der Changiereinrichtung führt. Der Einbau von Standardmagneten macht die Kupplung preisgünstig und für die Übertragung verschiedener, auch höherer Drehmomente einsetzbar.

Im folgenden wird die Erfindung anhand von lediglich Ausführungsmöglichkeiten darstellenden Zeichnungen näher erläutert.
Fig. 1 zeigt eine schematische Darstellung einer gesamten Changiereinrichtung mit einem Antriebsmotor 1, einer Kupplung 2, einer oder mehreren Changiereinheiten 3. Hierbei sind Mittel 4a und 4b vorgesehen, um ein Signal abzugeben, wenn das von der Kupplung übertragene Drehmoment und/oder der Stromverbrauch des Antriebsmotors ausserhalb eines definierten Bereiches liegt. Weiters ist vorgesehen, dass eine zentrale Steuerung 5 besagte Signale weiterverarbeiten kann.
Fig. 2 a-c zeigen bevorzugte Ausführungsformen der Magnetkupplung, die je eigene Vorteile aufweisen.
In Fig. 2a ist die Kupplung scheibenförmig ausgebildet. Es ist möglich, die beiden Kupplungshälften aus je einem Magneten zu arbeiten. Ebenso ist es möglich, dass jede Kupplungshälfte eine einzige Polung aufweist. Die bevorzugte Ausführungsform jedoch hat auf jeder Kupplungshälfte mehrere gleich starke Permanentmagneten, die in gleichem Abstand zu einander und zum Umfang angeordnet sind und abwechselnd gepolt sind. Diese Anordnung erlaubt es, für die gleiche Drehmomentzahl kleinere und günstigere Magneten zu benutzen als in den Ausführungen mit durchgehender oder einheitlicher Polung.
Fig. 2b zeigt ein Beispiel einer Ausführungsform mit Zylinder und Gegenzylinder, Fig. 2c eines mit Konus und Gegenkonus, wobei diese beiden Beispiele neben technischen Vorteilen auch eine andere Anordnung des Einbaus der gesamten Changiereinrichtung gewähren.
Fig. 3 zeigt eine Aufsicht auf eine Ausführungsmöglichkeit der Magnetkupplung. Hierbei ist mindestens ein Teil der Kupplung als Riemenrad für einen Riemenantrieb ausgebildet.
Fig. 4 zeigt ebenfalls eine Aufsicht auf eine Ausführungsmöglichkeit der Magnetkupplung, wobei diesmal mindestens ein Teil der Kupplung als Zahnrad ausgebildet ist, das an einen Riemenantrieb angekoppelt werden kann.
Fig. 5 zeigt eine Frontalsicht der Magnetkupplung im Ausführungsbeispiel 3. Sie verdeutlicht, dass Antrieb und Changiereinrichtung durch die einander berührungslos gegenüberliegenden Hälften der Kupplung trennbar sind, d.h. dass sich bspw. die Changiereinheit zum Wartung ausschwenken liesse, ohne dass dies den Teil der Maschine mit Motor und oberem Kupplungsteil tangieren würde.

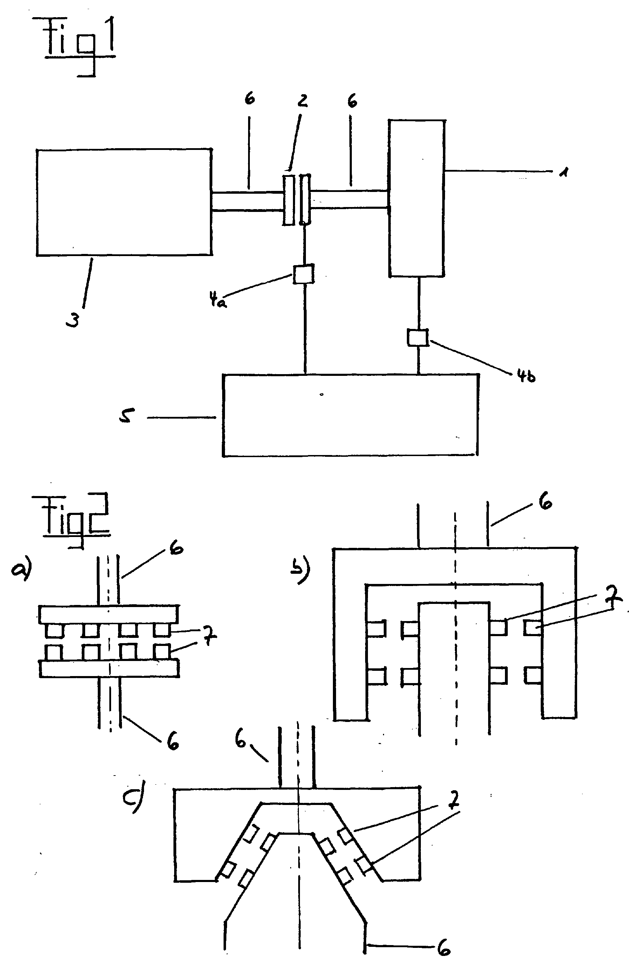

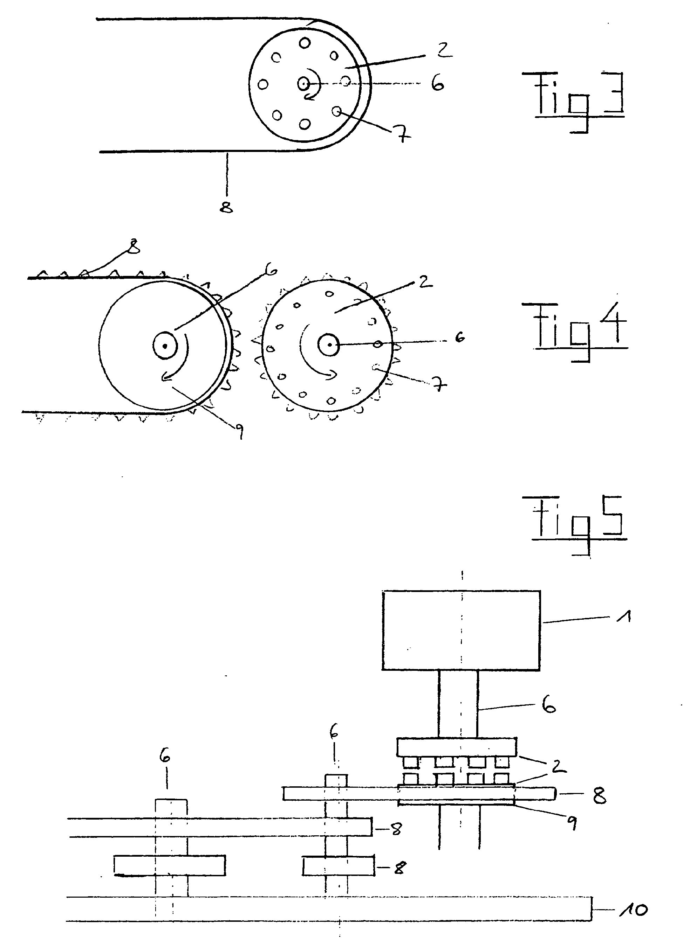

### Bezugszeichen

- 1: Antriebsmotor
- 2: Kupplung
- 3: Changiervorrichtung
- 4: Signalnehmer
- 5: Zentralrechner/Steuerung
- 6: Antriebsverbindung
- 7: Permanentmagnete
- 8: Riemenantrieb
- 9: Riemenrad
- 10: Grundplatte

## Patentansprüche

1. Flügelchangiereinrichtung für eine Spulmaschine zur Ablage von Fäden auf Spulen mit einem Antriebsmotor (1) und mindestens einer Changiereinheit (3), wobei zwischen Teilen der Changiereinheit in Betrieb exakte Winkelbeziehungen eingehalten werden müssen und wobei der Motor (1) eine Welle (6) antreibt, die mittels einer Kupplung (2) derart mit der Changiereinheit (3) verbunden ist, dass im Falle einer Blockade eine Dejustierung dieser Winkelbeziehungen verhindert werden soll,
**dadurch gekennzeichnet, dass**
die Kupplung (2) eine Magnetkupplung ist, wobei diese Kupplung eine erste mit der Welle (6) drehbare Kupplungshälfte und eine zweite Kupplungshälfte umfasst, welche die Drehung der Motorenwelle an die Changiereinheit weiterleitet, und wobei die Kupplungshälften mindestens zwei sich berührungslos gegenüberliegende Polenden aufweisen.

2. Flügelchangiereinrichtung nach Anspruch 1, **dadurch gekennzeichnet, dass** ein durch die Magnetkupplung übertragenes Drehmoment im durchdrehenden Zustand durchschnittlich = 0 ist.

3. Flügelchangiereinrichtung nach einem der vorangehenden Ansprüche, **dadurch gekennzeichnet, dass** mindestens eine Kupplungshälfte zugleich als Riemenrad für einen Riemen- oder Kettenantrieb ausgebildet ist.

4. Flügelchangiereinrichtung nach Anspruch 3, **dadurch gekennzeichnet, dass** mindestens ein Riemenrad als Zahnriemenrad ausgebildet ist.

5. Flügelchangiereinrichtung nach einem der vorangehenden Ansprüche, **dadurch gekennzeichnet, dass** durch mindestens zwei sich berührungslos gegenüberliegende Polenden eine Trennung von Antrieb und Changiereinheit ermöglicht wird.

6. Flügelchangiereinrichtung nach einem der vorangehenden Ansprüche, **dadurch gekennzeichnet, dass** jede Kupplungshälfte mit mindestens einem Permanentmagneten versehen ist.

7. Flügelchangiereinrichtung nach einem der vorangehenden Ansprüche, **dadurch gekennzeichnet, dass** eine Kupplungshälfte konisch und die andere den Konus umschliessend geformt ist.

8. Flügelchangiereinrichtung nach einem der vorangehenden Ansprüche, **dadurch gekennzeichnet, dass** eine Kupplungshälfte zylindrisch und die andere den Zylinder umschliessend geformt ist.

9. Flügelchangiereinrichtung nach einem der vorangehenden Ansprüche, **dadurch gekennzeichnet, dass** in der Einrichtung ein Antriebsmotor, mindestens ein Antriebselement, eine Magnetkupplung, mindestens eine Changiereinheit, eine Walze und mindestens ein Element zur Aufnahme einer Spule vorgesehen sind.

10. Flügelchangiereinrichtung nach einem der vorangehenden Ansprüche, **dadurch gekennzeichnet, dass** ein Mittel vorgesehen ist, das ein Signal abgibt, wenn das übertragene Drehmoment ausserhalb eines definierten Bereiches liegt.

11. Flügelchangiereinrichtung nach einem der Ansprüche 1 bis 9, **dadurch gekennzeichnet, dass** ein Mittel vorgesehen ist, das ein Signal abgibt, wenn der Stromverbrauch des Motors ausserhalb eines definierten Bereiches liegt.

12. Flügelchangiereinrichtung nach einem der Ansprüche 10 oder 11, **dadurch gekennzeichnet, dass** das Signal akustisch ist.

13. Flügelchangiereinrichtung nach einem der Ansprüche 10 oder 11, **dadurch gekennzeichnet, dass** das Signal optisch ist.

14. Flügelchangiereinrichtung nach einem der Ansprüche 10 bis 13, **dadurch gekennzeichnet, dass** das Signal an einen Zentralrechner weitergegeben wird.

## Claims

1. Wing-type traversing device for a bobbin-winding machine for the laying of threads on bobbins, with a drive motor (1) and at least one traversing unit (3), exact angular relations having to be maintained between parts of the traversing unit during operation, and the motor (1) driving a shaft (6) which is connected to the traversing unit (3) by means of a clutch (2) in such a way that, in the event of a blockage, a maladjustment of these angular relations is to be prevented, **characterized in that** the clutch (2) is a magnetic clutch, this clutch comprising a first clutch half rotatable with the shaft (6) and a second clutch half which transfers the rotation of the motor shaft to the traversing unit, and the clutch halves having at least two pole ends lying contactlessly opposite one another.

2. Wing-type traversing device according to Claim 1, **characterized in that** a torque transmitted by the magnetic clutch is on average equal to zero in the racing state.

3. Wing-type traversing device according to one of the preceding claims, **characterized in that** at least one clutch half is designed at the same time as a belt wheel for a belt or chain drive.

4. Wing-type traversing device according to Claim 3, **characterized in that** at least one belt wheel is designed as a toothed-belt wheel.

5. Wing-type traversing device according to one of the preceding claims, **characterized in that** a separation of the drive and traversing unit is made possible by at least two pole ends lying contactlessly opposite one another.

6. Wing-type traversing device according to one of the preceding claims, **characterized in that** each clutch half is provided with at least one permanent magnet.

7. Wing-type traversing device according to one of the preceding claims, **characterized in that** one clutch half is shaped conically and the other is shaped so as to surround the cone.

8. Wing-type traversing device according to one of the preceding claims, **characterized in that** one clutch half is shaped cylindrically and the other is shaped so as to surround the cylinder.

9. Wing-type traversing device according to one of the preceding claims, **characterized in that** a drive motor, at least one drive element, a magnetic clutch, at least one traversing unit, a roller and at least one element for receiving a bobbin are provided in the device.

10. Wing-type traversing device according to one of the preceding claims, **characterized in that** a means is provided which emits a signal when the transmitted torque lies outside a defined range.

11. Wing-type traversing device according to one of Claims 1 to 9, **characterized in that** a means is provided which emits a signal when the current consumption of the motor lies outside a defined range.

12. Wing-type traversing device according to either one of Claims 10 and 11, **characterized in that** the signal is acoustic.

13. Wing-type traversing device according to either one of Claims 10 and 11, **characterized in that** the signal is optical.

14. Wing-type traversing device according to one of Claims 10 to 13, **characterized in that** the signal is transferred to a central computer.

## Revendications

1. Dispositif de va et vient à pales pour une machine à bobiner pour déposer des fils sur des bobines, comprenant un moteur d'entraînement (1) et au moins une unité à va et vient (3), des rapports angulaires exacts devant être conservés entre des pièces de l'unité à va et vient pendant le fonctionnement, et le moteur (1) entraînant un arbre (6) qui est connecté au moyen d'un accouplement (2) à l'unité à va et vient (3) de telle sorte que dans le cas d'un blocage, un désajustement de ces rapports angulaires soit empêché,
**caractérisé en ce que**
l'accouplement (2) est un accouplement magnétique, cet accouplement comprenant une première moitié d'accouplement pouvant tourner avec l'arbre (6) et une deuxième moitié d'accouplement qui transmet la rotation de l'arbre du moteur à l'unité à va et vient, et les moitiés d'accouplement présentant au moins deux extrémités de pôles opposées sans contact.

2. Dispositif de va et vient à pales selon la revendication 1, **caractérisé en ce qu'**un couple transmis par l'accouplement magnétique, dans l'état continu, vaut en moyenne 0.

3. Dispositif de va et vient à pales selon l'une quelconque des revendications précédentes, **caractérisé en ce qu'**au moins une moitié d'accouplement est réalisée sous forme de roue à courroie pour un entraînement à courroie ou à chaîne.

4. Dispositif de va et vient à pales selon la revendication 3, **caractérisé en ce qu'**au moins une roue à courroie est réalisée sous forme de roue à courroie dentée.

5. Dispositif de va et vient à pales selon l'une quelconque des revendications précédentes, **caractérisé en ce qu'**une séparation de l'entraînement et de l'unité à va et vient est rendue possible par au moins deux extrémités de pôles opposées sans contact.

6. Dispositif de va et vient à pales selon l'une quelconque des revendications précédentes, **caractérisé en ce que** chaque moitié d'accouplement est pourvue d'au moins un aimant permanent.

7. Dispositif de va et vient à pales selon l'une quelconque des revendications précédentes, **caractérisé en ce qu'**une moitié d'accouplement a une forme conique et l'autre a une forme entourant le cône.

8. Dispositif de va et vient à pales selon l'une quelconque des revendications précédentes, **caractérisé en ce qu'**une moitié d'accouplement a une forme cylindrique et l'autre a une forme entourant le cylindre.

9. Dispositif de va et vient à pales selon l'une quelconque des revendications précédentes, **caractérisé en ce que** l'on prévoit dans le dispositif un moteur d'entraînement, au moins un élément d'entraînement, un accouplement magnétique, au moins une unité à va et vient, un rouleau et au moins un élément pour recevoir une bobine.

10. Dispositif de va et vient à pales selon l'une quelconque des revendications précédentes, **caractérisé en ce que** l'on prévoit un moyen qui fournit un signal lorsque le couple transmis se trouve en dehors d'une plage définie.

11. Dispositif de va et vient à pales selon l'une quelconque des revendications 1 à 9, **caractérisé en ce que** l'on prévoit un moyen qui fournit un signal lorsque la consommation de courant du moteur se trouve en dehors d'une plage définie.

12. Dispositif de va et vient à pales selon l'une quelconque des revendications 10 ou 11, **caractérisé en ce que** le signal est acoustique.

13. Dispositif de va et vient à pales selon l'une quelconque des revendications 10 ou 11, **caractérisé en ce que** le signal est optique.

14. Dispositif de va et vient à pales selon l'une quelconque des revendications 10 à 13, **caractérisé en ce que** le signal est retransmis à un ordinateur central.
